Europäisches Patentamt

European Patent Office

Office européen des brevets

(11) Veröffentlichungsnummer: **0 487 150 A1**

# EUROPÄISCHE PATENTANMELDUNG

(21) Anmeldenummer: **91202978.2**

(22) Anmeldetag: **31.10.91**

(51) Int. Cl.5: **H02G 3/22**

(30) Priorität: **19.11.90 DE 4036792**

(43) Veröffentlichungstag der Anmeldung:
**27.05.92 Patentblatt 92/22**

(84) Benannte Vertragsstaaten:
**BE DE ES FR GB IT NL**

(71) Anmelder: **STN Systemtechnik Nord GmbH**
**Hünefeldstrasse 1-5**

**W-2800 Bremen 1(DE)**

(72) Erfinder: **Seebode, Heinrich**
**Seestrasse 18**
**W-2000 Hamburg 52(DE)**

(74) Vertreter: **Eisenführ, Speiser & Partner**
**Martinistrasse 24**
**W-2800 Bremen 1(DE)**

(54) **Verfahren zur Herstellung von wasserdichten und feuerfesten Kabeldurchführungen durch Decken und Wände.**

(57) Verfahren zur Herstellung von wasserdichten und feuerfesten Kabeldurchführungen durch Decken und Wände, bestehend aus einem Hohlkörper vorbestimmter Länge, dessen Stirnflächen nach Durchziehen aller Kabel verschlossen werden und der mit einer aushärtbaren, aus zwei Komponenten bestehenden Gießmasse ausgefüllt wird. In der Ebene der Stirnflächen der Kabeldurchführung werden die Kabel auf Abstand haltende Formteile eingesetzt. Die verbleibenden Lücken zwischen der Wandung der Kabeldurchführung und den Formteilen werden mit Stücken desselben Werkstoffes ausgefüllt. Ein gegenüber dem Stand der Technik vereinfachtes Verfahren besteht darin, daß zum Aufbau der Stirnwände Module aus gepreßtem Faserdämmstoff verwendet werden. Hierbei kann es sich um Module aus Langfaser-Glasdämmstoff oder aus Steinwolle handeln.

EP 0 487 150 A1

Die Erfindung betrifft ein Verfahren zur Herstellung von wasserdichten und feuerfesten Kabeldurchführungen durch Decken und Wände, bestehend aus einem Hohlkörper vorbestimmter Länge, dessen Stirnflächen nach Durchziehen aller Kabel verschlossen werden und der mit einer aushärtbaren, aus zwei Komponenten bestehenden Gießmasse ausgefüllt wird, wobei in der Ebene der Stirnflächen der Kabeldurchführung die Kabel und auf Abstand haltende Formteile eingesetzt werden und die verbleibenden Lücken zwischen der Wandung der Kabeldurchführung und den Formteilen mit Stücken desselben Werkstoffes ausgefüllt werden.

Bei einem derartigen, aus der DE 29 08 238 C2 bekannten Verfahren wird zum Aufbau der Stirnwände ein saug- und quellfähiger, in zwei Ebenen gepreßter Werkstoff verwendet, der vor dem Auffüllen des Hohlkörpers mit der flüssigen Gießmasse mit einer Flüssigkeit vorbehandelt wird, mit der außer einer Quellwirkung auch eine Verfestigung des Werkstoffes sowie eine Feuerfestigkeit erzielt wird. Als Flüssigkeit kann Kieselsole verwendet werden.

Der Erfindung liegt die Aufgabe zugrunde, ein vereinfachtes, die Herstellungskosten verringerndes Verfahren vorzuschlagen.

Die Aufgabe wird erfindungsgemäß dadurch gelöst, daß zum Aufbau der Stirnwände Module aus gepreßtem Faserdämmstoff verwendet werden.

Ausgestaltungen der Erfindung sind in den Unteransprüchen beschrieben.

Ein Vorteil der Erfindung gegenüber dem eingangs genannten Stand der Technik besteht darin, daß eine Vorbehandlung der Module durch Besprühen mit einer Flüssigkeit nicht erforderlich ist, da das verwendete Glasfaserdämmstoffmaterial nach DIN 4102 nicht brennbar ist und zudem ein Ausflaufen der einzufüllenden Gießmasse anorganischer oder organischer Art verhindert. Somit entfällt gegenüber dem vorbekannten Verfahren vorteilhafterweise ein Verfahrensschritt.

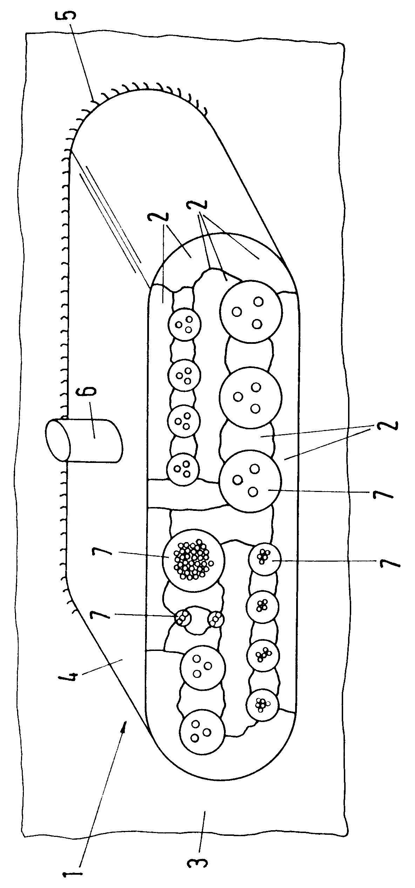

In der Zeichnung ist eine Draufsicht auf die Stirnfläche einer nach dem erfindungsgemäßen Verfahren hergestellten Kabeldurchführung dargestellt.

Die Kabeldurchführung 1 weist einen ovalen Rohrstutzen 4 auf, der durch eine Wand 3, beispielsweise Trennwand an Bord eines Schiffes, geführt ist und mit dieser mittels Schweißnaht 5 wasser- und gasdicht verbunden ist. Die die Kabeldurchführung 1 durchsetzenden Kabel sind mit 7 bezeichnet, wobei diese Kabel durch Module 2 aus gepreßtem Faserdämmstoff untereinander und zur Innenwandung des Rohrstutzens 4 auf Abstand gehalten werden. Die Module 2 können aus Langfaser-Glasdämmstoff oder Faserdämmstoff aus Stein (Steinwolle) bestehen.

Zur Herstellung der Kabeldurchführung 1 werden nach Einlegen aller Kabel 7 in den Rohrstutzen 4 die Zwischenräume zwischen den Kabeln 7 untereinander und zur Innenwandung des Rohrstutzens 4 mit den Modulen 2 ausgefüllt. Wenn alle Hohlräume und Lücken ausgefüllt sind, steht das gesamte Werkstoffpaket etwas unter Spannung und es wird dann eine feuerfeste Gießmasse über einen oder mehrere Einfüllstutzen 6 in das Innere der Kabeldurchführung 1 gegossen. Die Gießmasse durchdringt die Module 2 aus gepreßten Faserdämmstoffen und bildet mit diesen nach dem Aushärten eine feuerfeste und dichte Stirnwand. Als Gießmasse kann

z. B. Vergußmasse E 795 anorganisch

z. B. Vergußmasse E 950 anorganisch

z. B. Vergußmasse E 292 organisch

verwendet werden.

## Patentansprüche

1. Verfahren zur Herstellung von wasserdichten und feuerfesten Kabeldurchführungen durch Decken und Wände, bestehend aus einem Hohlkörper vorbestimmter Länge, dessen Stirnflächen nach Durchziehen aller Kabel verschlossen werden und der mit einer aushärtbaren, aus zwei Komponenten bestehenden Gießmasse ausgefüllt wird, wobei in der Ebene der Stirnflächen der Kabeldurchführung die Kabel auf Abstand haltende Formteile eingesetzt werden und die verbleibenden Lücken zwischen der Wandung der Kabeldurchführung und den Formteilen mit Stücken desselben Werkstoffes ausgefüllt werden, dadurch gekennzeichnet, daß zum Aufbau der Stirnwände Module (2) aus gepreßtem Faserdämmstoff verwendet werden.

2. Verfahren nach Anspruch 1, gekennzeichnet durch die Verwendung von Modulen (2) aus Langfaser-Glasdämmstoff.

3. Verfahren nach Anspruch 1, dadurch gekennzeichnet, daß Faserdämmstoffe aus Stein (Steinwolle) für die Module (2) verwendet werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 378 909 (INTELLECTUAL)<br>* Seite 3, Zeile 16 - Seite 5, Zeile 29; Abbildungen 2,3 *<br>--- | 1-3 | H02G3/22 |
| A | DE-U-8 223 458 (BUTH)<br>* das ganze Dokument *<br>--- | 1 | |
| A | WO-A-8 000 205 (LICENTIA)<br>* Seite 4, Zeile 29 - Seite 7, Zeile 11; Abbildungen 1-3 * | 1 | |
| D | & DE-A-2 908 238<br><br>----- | | |
| | | | **RECHERCHIERTE SACHGEBIETE (Int. Cl.5)**<br><br>H02G |

Der vorliegende Recherchenbericht wurde für alle Patentansprüche erstellt

| Recherchenort | Abschlußdatum der Recherche | Prüfer |
|---|---|---|
| DEN HAAG | 18 FEBRUAR 1992 | RIEUTORT A.S. |